# EUROPEAN PATENT APPLICATION

(11) **EP 2 207 254 A2**
(43) Date of publication of application: **14.07.2010**
(21) Application number: 09009629.8
(22) Date of filing: 24.07.2009
(51) Int. Cl.: H02K 3/52

(54) **Hermetic compressor and refrigerating cycle apparatus**

(30) Priority: 13.01.2009 JP 2009004833
(71) Applicant: Mitsubishi Electric Corporation, Tokyo 100-8310 (JP)
(72) Inventor: Kazama, Osamu, Tokyo 100-8310 (JP); Oikawa, Tomoaki, Tokyo 100-8310 (JP); Tsutsumi, Takahiro, Tokyo 100-8310 (JP); Fujisue, Yoshikazu, Tokyo 100-8310 (JP); Morishima, Kazuhito, Tokyo 100-8310 (JP)
(74) Representative: Pfenning, Meinig & Partner GbR

(57) **Abstract**

A hermetic compressor 130 related to the present invention contains a motor element 103 having a stator and a compressing element 102 driven by the motor element 103 and compressing refrigerant in a hermetic container 101. In the hermetic compressor 130, the stator 1 includes a stator iron core having a plurality of magnetic pole tooth; insulating members 3 to be inserted to the magnetic pole teeth; windings 4, for at least a pan of which aluminum wire is used, to be wound to the magnetic pole teeth via the insulating members 3; winding connection parts for carrying out wire connection of the windings 4; and press-contact terminals used for the winding connection parts.

## Description

### BACKGROUND OF THE INVENTION

### FIELD OF THE INVENTION

The present invention relates to a hermetic compressor, which is highly manufacturuable and highly reliable, while using a low-cost aluminum wire for a motor driving the compressor, and a refrigerating cycle apparatus employing the hermetic compressor.

### DISCUSSION OF THE BACKGROUND

A conventional hermetic compressor generally uses copper wire for winding of a motor which drives a compressor mechanism. However, since copper wire costs much, aluminum wire is sometimes used (refer to Patent Document 1, for example).

### LIST OF REFERENCES

[Patent Document 1] JP 2008-173001

In a conventional hermetic compressor, in order to reduce the cost, aluminum wire is sometimes used for the winding of the motor; however, there is a problem that it is difficult to weld a wire connection part, etc. when the aluminum wire is used.

Conventionally, for copper wire, soldering or brazing is generally used for connecting a wire connection part of winding; however, aluminum gets easily oxidized, and if once aluminum oxide is formed on the surface of aluminum, it is difficult to remove aluminum oxide. The melting point of aluminum oxide is 2030 degrees Celsius, while the melting point of aluminum is 660 degrees Celsius, and thus it is necessary to use flux. If the flux remains, the flux becomes a foreign substance for the hermetic compressor, so that there is a problem the remained flux may affect badly to the hermetic compressor or the refrigerating cycle apparatus employing the hermetic compressor.

The present invention aims to solve the above problems, and an object of the invention is to provide a hermetic compressor, which is highly manufacturable and maintains high quality, while using low-cost aluminum wire for the winding of the motor, and a refrigerating cycle apparatus employing the hermetic compressor.

### SUMMARY OF THE INVENTION

A hermetic compressor related to the present invention contains a motor element having a stator and a compressing element driven by the motor element and compressing refrigerant in a hermetic container. In the hermetic compressor, the stator includes a stator iron core having a plurality of magnetic pole tooth; insulating members to be inserted to the magnetic pole teeth; windings, for at least a part of which aluminum wire is used, to be wound to the magnetic pole teeth via the insulating members; winding connection parts for carrying out wire connection of the windings; and press-contact terminals used for the winding connection parts.

### BRIEF DESCRIPTION OF THE DRAWINGS

A complete appreciation of the present invention and many of the attendant advantages thereof will be readily obtained as the same becomes better understood by reference to the following detailed description when considered in connection with the accompanying drawings, wherein:
Fig. 1 shows the first embodiment, and is a top view of a stator 1;
Fig. 2 shows the first embodiment, and illustrates a structure of an insulating member 3 ((a) shows a top view, (b) shows is a front view, and (c) shows a side view);
Fig. 3 shows the first embodiment, and is a connecting diagram of a winding 4 of a stator 1;
Fig. 4 shows the first embodiment, and is a circuit diagram of the winding 4 of the stator 1;
Fig. 5 shows the first embodiment, and is a perspective view showing status in which press-contact terminals 8 are inserted to cavities 51 and 52 and the winding 4 and a connecting wire are electrically connected;
Fig. 6 shows the first embodiment, and is a longitudinal sectional view of a hermetic compressor 130;
Fig. 7 shows the first embodiment, and is a A-A cross sectional view of Fig. 6;

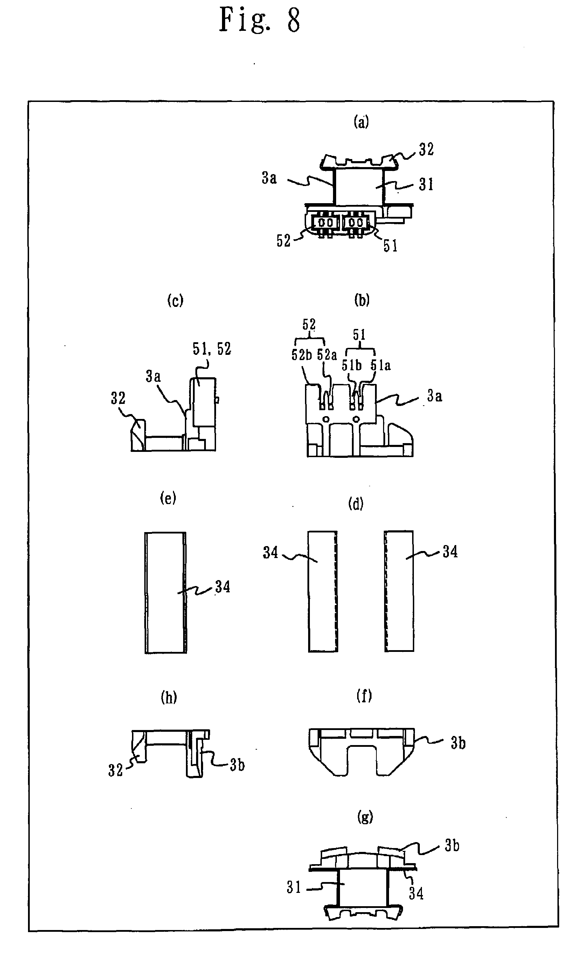

Fig. 8 shows the second embodiment, and illustrates the insulating member 3 ((a) shows a top view of a wire-connection-side insulating member 3a, (b) shows a front view of the wire-connection-side insulating member 3a, (c) shows a side view of the wire-connection-side insulating member 3a, (d) shows a front view of an insulating film 34, (e) shows a side view of the insulating film 34, (f) shows a top view of a counter-wire-connection-side insulating member 3b, (g) shows a front view of the counter-wire-connection-side insulating member 3b, and (h) shows a side of the counter-wire-connection-side insulating member 3b);
Fig. 9 shows the second embodiment, and is a cross sectional view of a hermetic compressor 130 which corresponds to Fig. 7;
Fig. 10 shows the third embodiment, and is an outlined structural diagram of a refrigerant circuit of a refrigerating cycle apparatus; and
Fig. 11 shows the third embodiment, and shows types of refrigerant, refrigerating machine oil, and insulating material used within the refrigerant circuit.

### DESCRIPTION OF THE PREFERRED EMBODIMENTS

### Embodiment 1.

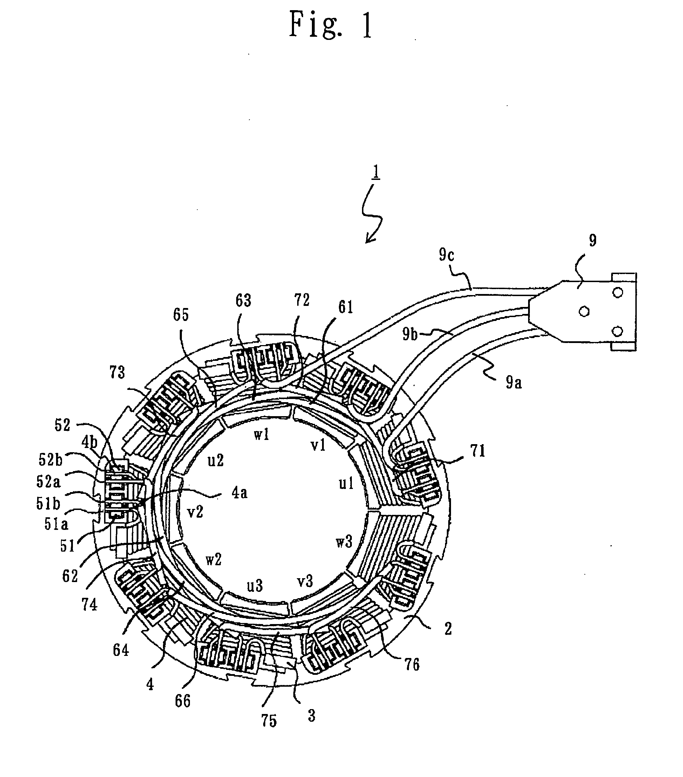

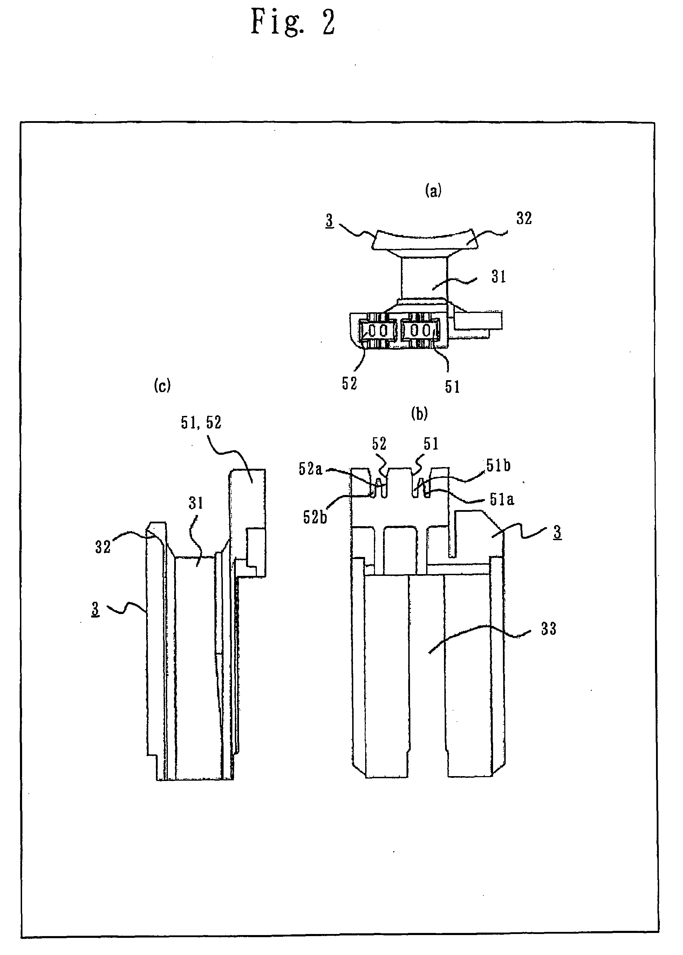

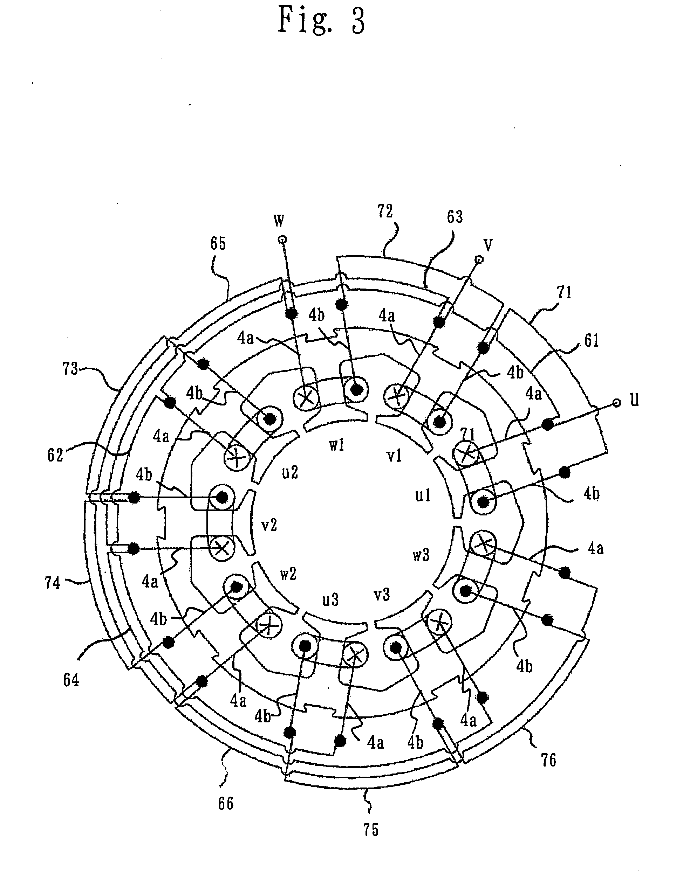

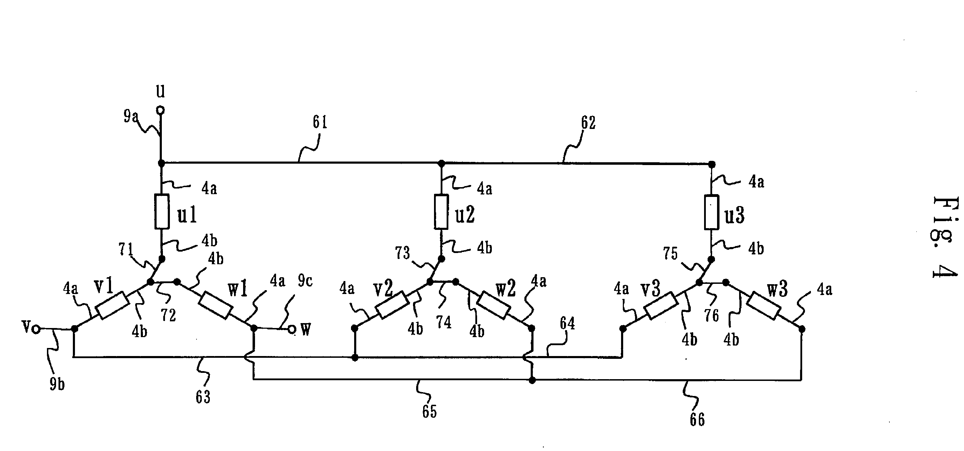

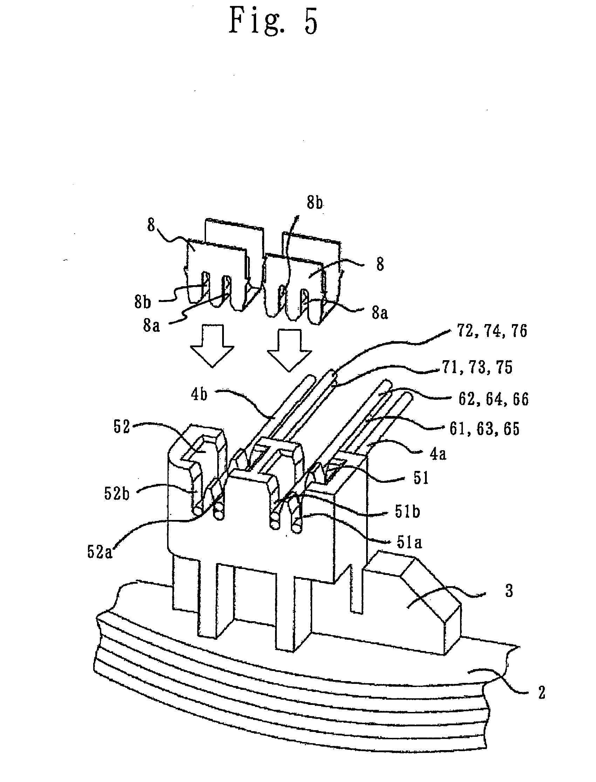

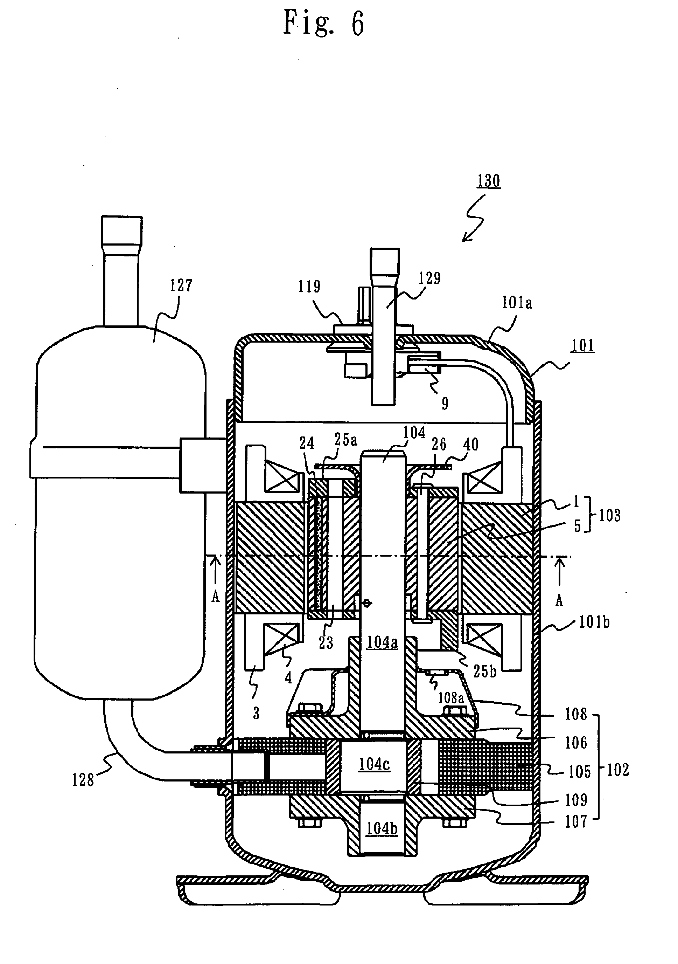

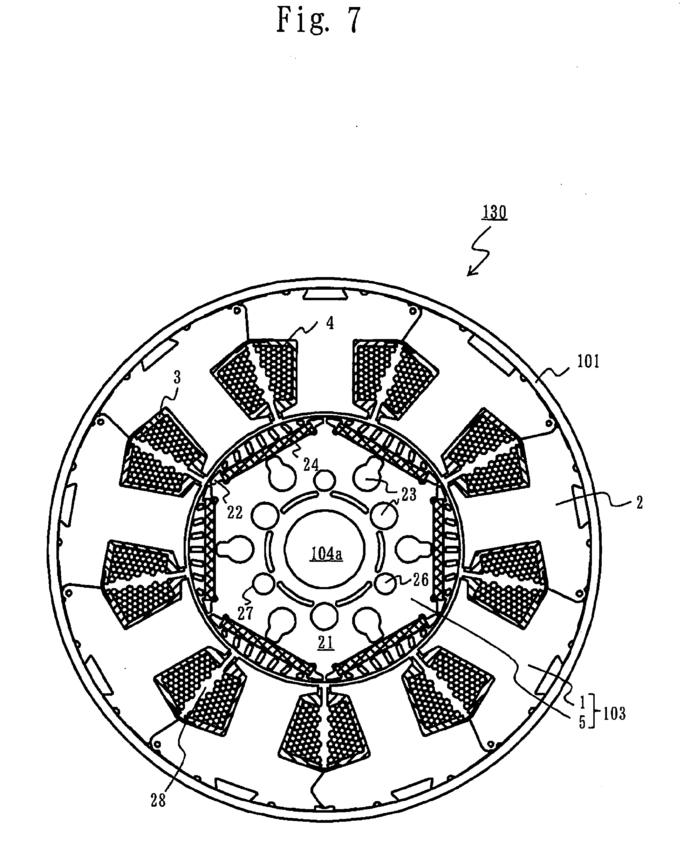

Figs. 1 through 7 show the first embodiment, in which Fig. 1 is a top view of a stator 1; Fig. 2 illustrates a structure of an insulating member 3 ((a) shows a top view, (b) shows a front view, (c) shows a side view); Fig. 3 is a connecting diagram of a winding 4 of a stator 1; Fig. 4 is a circuit diagram of the winding 4 of the stator 1; Fig. 5 is a perspective view showing status in which press-contact terminals 8 are inserted to cavities 51 and 52 and the winding 4 and a connecting wire are electrically connected; Fig. 6 is a longitudinal sectional view of a hermetic compressor 130; and Fig. 7 is a A-A cross sectional view of Fig. 6.

First, an outline of the present embodiment will be explained. In order to reduce the cost of the hermetic compressor, aluminum wire is used for winding of the motor. However, as discussed above, aluminum wire has a problem that it is difficult to weld the wire connection part, etc.

Like copper wire, if brazing is done for connecting the wire connection part of the winding when aluminum wire is used, aluminum oxide is generated on the surface of aluminum, since aluminum is easily oxidizable. The melting point of aluminum oxide is 2030 degrees Celsius, while the melting point of aluminum is 660 degrees Celsius; it is difficult to remove aluminum oxide.

Therefore, it is necessary to use flux for brazing aluminum wire.

The surface of metal is usually covered with oxide film; when temperature increases, oxidation acts dramatically, which causes oxidation to grow and thickens the oxide film. Since brazing is carried out by "wetting" phenomena which occurs when clean solid metal (base metal) is contacted with melted metal (brazing filler metal), it is necessary to remove the surface oxide film of the base metal and the melted brazing metal and prevent oxidation while heating in order to perform appropriate brazing. Because of this, flux is used to remove the oxide film and prevent oxidation while heating. As for flux, it is necessary to select the most suitable flux according to the base metal/the brazing filler metal.

If the flux which is used for brazing the aluminum wire remains, the flux becomes a foreign substance for the hermetic compressor, so that there is a problem that the remained flux may affect badly to the hermetic compressor or the refrigerating cycle apparatus employing the hermetic compressor.

Accordingly, in a hermetic compressor of the present embodiment, aluminum wire is used for at least a part of the winding of the motor, and connection of the winding is done using a press-contact terminal. Since the aluminum is connected without using brazing, there is no possibility that flux remains.

Using aluminum wire for at least a part of the winding of the motor means to include, for example, a case of bifilar winding, in which aluminum wire and copper wire are used together.

When aluminum wire is used for at least a part of the winding of the motor and the wire connection of the winding is done using the press-contact terminal, if material of the press-contact terminal is brass, it is anticipated that contact of aluminum with brass may cause electrolytic etching. However, since amount of water of the hermetic compressor is strictly controlled, if it is within the hermetic compressor, there is little fear of generation of electrolytic etching caused by the contact of aluminum with brass.

First, an example of a stator will be explained, in which wire connection of winding is done using the press-contact terminal.

In a stator 1 shown in Fig. 1, a stator iron core 2 has nine magnetic pole teeth, and concentrated winding 4 is applied to each of the magnetic pole teeth. Nine independent windings 4 are connected to form three-phase six-pole winding. A detail will be discussed later.

When applying the concentric winding 4 to each of the magnetic pole teeth, the winding is done after attaching insulating member 3 to each of the magnetic pole teeth.

The winding 4 of each of the magnetic pole teeth is formed independently; each of the winding 4 of each of the magnetic pole teeth has a winding-starting end and a winding-terminating end.

Therefore, in order to form three-phase six-pole winding by connecting nine independent windings 4, it is necessary to connect the winding 4 of each magnetic pole teeth. Wire for connecting the winding 4 of each of the magnetic pole teeth are connected by connecting wire (a lead side connecting wire, a the neutral point side connecting wire).

Each of the insulating member 3 of each magnetic pole tooth has winding connection part using press-contact terminal. In the winding connection part, connection is done between the winding-starting end and the winding-terminating end of the winding 4 of each of the magnetic pole teeth, and between connecting wire and lead wire (for connecting to the outside power source).

As shown in Fig. 1, the stator 1 includes a stator iron core 2, in which a member having a magnetic pole tooth is formed by laminating core sheets which are made by punching out thin electromagnetic plates, each member is jointed pivotably using a caulk provided at the core sheet by creating concavities and convexities on the core sheet (a joint-wrap system), and is closed circularly with a status that the magnetic pole teeth are open to the inner circumference side, and a winding 4 to be directly wound to each of the magnetic pole teeth of the stator iron core 2 via an insulating member 3.

In the stator iron core 2 of the joint-wrap system, the magnetic pole teeth are opened circularly (back flex) directed toward the outer circumference side, and the winding 4 can be directly wound to each of the magnetic pole teeth via the insulating member 3 using a flier. Therefore, the windings 4 are wound in line and as well the occupation ratio can be increased.

In the winding 4, nine coils in total including three for each phase of u1 through u3, v1 through v3, and w1 through w3 are repeatedly arranged in the rotational direction (counterclockwise in Fig. 1) in the order of u-phase, v-phase, and w-phase.

Then, at one end of the stator iron core 2, cavities 51 and 52 are formed for taking a role of a receiver of wires on each insulating member 3. For material of the insulating member 3, LCP (liquid crystal polymer) is used, for example.

As shown in Fig. 2, the cavity 51 is provided with two wire restraint grooves 51a and 51b. Further, the cavity 52 is also provided with two wire restraint grooves 52a and 52b.

Further, the insulating member 3 includes a body 31 of the insulating member, a rotor-side winding holding part 32 of the insulating member, and a magnetic pole tooth fixing groove 33 of the insulating member. The magnetic pole tooth fixing groove 33 of the insulating member is fitted from one end in the axial direction of the magnetic pole teeth of the stator iron core 2.

Further, though it is not illustrated, the insulating member 3 without including the cavities 51 and 52 is fitted from another end in the axial direction of the magnetic pole teeth of the stator iron core 2.

The winding 4 is wound to the body 31 of the insulating member located between the cavities 51 and 52 and the rotor-side winding holding part 32 of the insulating member.

As shown in the connecting diagram of the stator 1 of Fig. 3, for each phase, winding-starting ends 4a are connected by lead-side connecting wires 61 through 66 (also refer to a circuit diagram of Fig. 4).

In detail, a winding starting end 4a of the coil u1 of u-phase and a winding starting end 4a of the coil u2 are connected by the lead-side connecting wire 61, and a winding starting end 4a of the coil u2 and a winding starting end 4a of the coil u3 are connected by the lead-side connecting wire 62.

Further, a winding starting end 4a of the coil v1 of v-phase and a winding starting end 4a of the coil v2 are connected by the lead-side connecting wire 63, and a winding starting end 4a of the coil v2 and a winding starting end 4a of the coil v3 are connected by the lead-side connecting wire 64.

In addition, a winding starting end 4a of the coil w1 of w-phase and a winding starting end 4a of the coil w2 are connected by the lead-side connecting wire 65, and a winding starting end 4a of the coil w2 and a winding starting end 4a of the coil w3 are connected by the lead-side connecting wire 66.

As for a winding terminating end 4b, coils located next to each other of the u-phase, the v-phase, and the w-phase, are connected by the neutral-point-side connecting wires 71 through 76.

In detail, a winding terminating end 4b of the coil u1 and a winding terminating end 4b of the coil v1 are connected by the neutral-point-side connecting wire 71, and a winding terminating end 4b of the coil v1 and a winding terminating end 4b of the coil w1 are connected by the neutral-point-side connecting wire 72.

Further, a winding terminating end 4b of the coil u1 and a winding terminating end 4b of the coil v1 are connected by the neutral-point-side connecting wire 71, and a winding terminating end 4b of the coil v1 and a winding terminating end 4b of the coil w1 are connected by the neutral-point-side connecting wire 72.

In addition, a winding terminating end 4b of the coil u3 and a winding terminating end 4b of the coil v3 are connected by the neutral-point-side connecting wire 75, and a winding terminating end 4b of the coil v3 and a winding terminating end 4b of the coil w3 are connected by the neutral-point-side connecting wire 76.

The windings 4 of the stator 1 are connected as discussed above; the coils u1, v1, and w1 form one Y-connection, the coils u2, v2, and w2 form another Y-connection, and the coils u3, v3, and w3 form yet another Y-connection. Then, these Y-connections are connected in parallel.

Here, another wire connection method can be used such that the coils u1, u2, and u3 are connected in series, the coils v1, v2, and v3 are connected in series, and further, the coils w1, w2, and w3 are connected in series, thereby forming one Y-connection.

The explanation returns to Fig. 1. At the insulating member 3 of each of the coils u1 through w3, the winding starting end 4a drawn from the winding 4 is attached to a wire constraint groove 51a of the cavity 51, and the winding terminating end 4b is attached to a wire constraint groove 52b of a cavity 52 (also refer to Fig. 5).

Further, the lead-side connecting wires 61 through 66 are attached to a wire constraint groove 51b of the cavity 51 so that the lead-side connecting wire 61 connects the coils u1 and u2, the lead-side connecting wire 62 connects the coils u2 and u3, the lead-side connecting wire 63 connects the coils v1 and v2, the lead-side connecting wire 64 connects the coils v2 and v3, the lead-side connecting wire 65 connects the coils w1 and w2, and the lead-side connecting wire 66 connects the coils w2 and w3.

At this time, to the coils u2, v2, and w2, two lead-side connecting wires are attached at the wire constraint groove 51b.

Namely, to the coil u2, the lead-side connecting wire 61 and the lead-side connecting wire 62 are attached at the wire constraint groove 51b.

Further, to the coil v2, the lead-side connecting wire 63 and the lead-side connecting wire 64 are attached at the wire constraint groove 51b.

Yet further, to the coil w2, the lead-side connecting wire 65 and the lead-side connecting wire 66 are attached at the wire constraint groove 51b.

In addition, the neutral-point-side connecting wires 71 through 76 are attached to a wire constraint groove 52a of the cavity 52 so that the neutral-point-side connecting wire 71 connects the coils u1 and v1, the neutral-point-side connecting wire 72 connects the coils v1 and w1, the neutral-point-side connecting wire 73 connects the coils u2 and v2, the neutral-point-side connecting wire 74 connects the coils v2 and w2, the neutral-point-side connecting wire 75 connects the coils u3 and v3, and the neutral-point-side connecting wire 76 connects the coils v3 and w3.

At this time, to the coils v1, v2, and v3, two the neutral-point-side connecting wires are attached at the wire constraint groove 52a.

Namely, to the coil v1, the neutral-point-side connecting wire 71 and the neutral-point-side connecting wire 72 are attached at the wire constraint groove 52a.

Further, to the coil v2, the neutral-paint-side connecting wire 73 and the neutral-point-side connecting wire 74 are attached at the wire constraint groove 52a.

Yet further, to the coil v3, the neutral-point-side connecting wire 75 and the neutral-point-side connecting wire 76 are attached at the wire constraint groove 52a.

As for the coil v2, the following six wires are gathered:
(1) the winding starting end 4a of the coil v2;
(2) the winding terminating end 4b of the coil v2;
(3) the neutral-point-side connecting wire 73;
(4) the neutral-point-side connecting wire 74;
(5) the lead-side connecting wire 63; and
(6) the lead-side connecting wire 64.

For reference, wire connection of another part will be explained. A lead wire 9 includes a u-phase lead wire 9a, a v-phase lead wire 9b, and a w-phase lead wire 9c.

As for the coil u1, the following five wires are gathered:
(1) the u-phase lead wire 9a;
(2) the winding starting end 4a of the coil u1;
(3) the winding terminating end 4b of the coil u1;
(4) the lead-side connecting wire 61; and
(5) the neutral-point-side connecting wire 71.

As for the coil u2, the following five wires are gathered:
(1) the winding starting end 4a of the coil u2;
(2) the winding terminating end 4b of the coil u2;
(3) the lead-side connecting wire 61;
(4) the lead-side connecting wire 62; and
(5) the neutral-point-side connecting wire 73.

As for the coil u3, the following four wires are gathered:
(1) the winding starting end 4a of the coil u3;
(2) the winding terminating end 4b of the coil u3;
(3) the lead-side connecting wire 62; and
(4) the neutral-point-side connecting wire 75.

As for the coil v1, the following six wires are gathered:
(1) the v-phase lead wire 9b;
(2) the winding starting end 4a of the coil v1;
(3) the winding terminating end 4b of the coil v1;
(4) the lead-side connecting wire 63;
(5) the neutral-point-side connecting wire 71; and
(6) the neutral-point-side connecting wire 72.

As for the coil v3, the following five wires are gathered:
(1) the winding starting end 4a of the coil v3;
(2) the winding terminating end 4b of the coil v3;
(3) the lead-side connecting wire 64;
(4) the neutral-point-side connecting wire 75; and
(5) the neutral-point-side connecting wire 76.

As for the coil w1, the following five wires are gathered:
(1) the w-phase lead wire 9c;
(2) the winding starting end 4a of the coil w1;
(3) the winding terminating end 4b of the coil w1;
(4) the lead-side connecting wire 65; and
(5) the neutral-point-side connecting wire 72.

As for the coil w2, the following five wires are gathered:
(1) the winding starting end 4a of the coil w2;
(2) the winding terminating end 4b of the coil w2;
(3) the lead-side connecting wire 65;
(4) the lead-side connecting wire 66; and
(5) the neutral-point-side connecting wire 74.

As for the coil w3, the following four wires are gathered:
(1) the winding starting end 4a of the coil w3;
(2) the winding terminating end 4b of the coil w3;
(3) the lead-side connecting wire 66; and
(4) the neutral-point-side connecting wire 76.

Then, as shown in Fig. 5, the press-contact terminals 8 having a conducting grooves 8a and 8b are inserted respectively to the cavities 51 and 52, and the winding 4 and the connecting wire or the lead wire 9 are electrically connected. However, the lead wire 9 is not illustrated in Fig. 5.

As shown in Fig. 5, the winding starting end 4a of the winding 4 and the lead-side connecting wires 61 through 66 are placed on the cavity 51 of the insulating member 3, and from the above of this, the press-contact terminal 8 having the conducting grooves 8a and 8b, of which the widths are smaller than the diameters of these wires, at one end, is pushed into the cavity 51.

The material of the press-contact terminal 8 is, for example, copper or phosphor bronze plated with nickel, etc.

Since the winding starting end 4a of the winding 4 and the lead-side connecting wires 61 through 66 are constrained by the wire constraint grooves 51a and 51b provided at the cavity 51, insulating layers of the winding starting end 4a and the lead-side connecting wires 61 through 66 are removed by the conducting grooves 8a and 8b.

This makes the winding 4 is conducted with the press-contact terminal 8, and the lead-side connecting wires 61 through 66 are conducted with the press-contact terminal 8, so that the winding 4 and the lead-side connecting wires 61 through 66 become connected.

Similarly, the winding terminating end 4b of the winding 4 and the neutral-point-side connecting wires 71 through 76 are placed on the cavity 52 of the insulating member 3, and from the above of this, another press-contact terminal 8 is pushed into the cavity 52, and thereby the winding 4 and the neutral-point-side connecting wires 71 through 76 become connected.

As has been discussed, the wire connection of
(1) the winding starting end 4a of the winding, one of the lead-side connecting wires 61 through 66, and one of the lead wires 9;
(2) the winding starting end 4a of the winding, and one or two of the lead-side connecting wires 61 through 66; and
(3) the winding terminating end 4b and one or two of the neutral-point-side connecting wires 71 through 76,
can be done using the press-contact terminal 8 without welding, and thus it is possible to easily connect wires even if aluminum wire is used for the winding 4.

As has been discussed, on the cavities 51 and 52 of the insulating member 3, a predetermined combinations of the winding 4, the connecting wires (the lead-side connecting wires 61 through 66, the neutral-point-side connecting wires 71 through 76), or the lead wires 9 (the u-phase lead wire 9a, the v-phase lead wire 9b, and the w-phase lead wire 9c) are placed, and the press-contact terminals 8 are inserted to the cavities 51 and 52, thereby connecting them. This part is defined as "the winding connection part".

Here, the stator 1 of joint-wrap system, in which the stator iron core 2 is jointed rotatably, has been discussed; however, the same effect can be obtained also in case of a split type iron core having no function to joint or in case of an integrated type iron core of which all magnetic pole teeth are punched out together without splitting.

Further, the embodiment of concentrated winding system has been discussed here, in which wire is directly wound to each of the magnetic pole teeth; however, the same effect can be obtained also in case of a distributed winding system in which wire is wound over plural magnetic pole teeth.

Next, a hermetic compressor 130 will be explained. With reference to Fig. 6, a general structure of the hermetic compressor 130 will be explained. An example of the hermetic compressor 130 shown in Fig. 6 is a 1-cylinder rotary compressor.

In the hermetic compressor 130, a compressing element 102 for compressing refrigerant and a motor element 103 for driving the compressing element 102 are contained in a hermetic container 101 which is composed of an upper container 101a and a lower container 101b. Further, in the bottom part inside of the hermetic container 101, refrigerating machine oil (not illustrated) for lubricating a sliding part of the compressing element 102.

The compressing element 102 includes a cylinder 105, an upper bearing 106, a lower bearing 107, a rotating shaft 104, a rolling piston 109, a discharge muffler 108, and a vane (not illustrated), etc.

The cylinder 105 in which a compression chamber is formed has a cylinder chamber, an outer circumference of which is an approximate circular form in planar view and an inside of which is an approximate circular space in planar view. The cylinder chamber has openings at both ends of the axial direction. The cylinder 105 has a predetermined height in the axial direction in side view.

A vane groove (not illustrated), which is communicated with the cylinder chamber being the approximate circular space and extends in the radial direction, is provided by penetrating through the cylinder 105 in the axial direction.

Further, at the back (the outside) of the vane groove, a back pressure chamber (not illustrated), which is an approximate circular space in planar view and is communicated with the vane groove, is provided.

In the cylinder 105, a suction joint pipe 128 which is flowed through by sucked gas from the refrigerating cycle is jointed to the cylinder chamber from the outer circumference of the cylinder 105.

In the cylinder 105, a discharge port (not illustrated) which is made by cutting a part around an edge (an end face of the motor element 103 side) of the circle that forms the cylinder chamber being the approximate circular space, is provided.

The rolling piston 109 rotates eccentrically within the cylinder chamber. The rolling piston 109 has a ring shape; an inner circumference of the rolling piston 109 is fixed to an eccentric shaft part 104c of the rotating shaft 104 slidably.

The vane is contained in the vane groove of the cylinder 105, and the vane is always pushed against the rolling piston 109 with a vane spring (not illustrated) provided at the back pressure chamber. As for the rotary compressor, since the inside of the hermetic container 101 is high-pressure, on starting the operation, a force caused by pressure difference between the high pressure in the hermetic container 101 and the pressure in the cylinder chamber is worked on the back face of the vane (the back pressure chamber side), and thus the vane spring is used mainly to push the vane to the rolling piston 109 at the time of starting the rotary compressor (when there is no pressure difference between the inside of the hermetic container 101 and the pressure of the cylinder chamber).

A shape of the vane is a flat (the thickness in the circumferential direction is smaller than the length of the diameter direction and the axial direction) approximate rectangular solid.

An upper bearing 106 is fitted slidably to a main shaft part 104a (a part above the eccentric shaft part 104c) of the rotating shaft 104, and as well blocks one end (the motor element 103 side) of the cylinder chamber (including the vane groove) of the cylinder 105.

To the upper bearing 106, a discharge valve (not illustrated) is attached. The upper bearing 106 has an approximate inverted T shape in side view.

A lower bearing 107 is fitted to an auxiliary axis part 104b (a part below the eccentric shaft part 104c) of the rotating shaft 104 slidably, and as well blocks the other end (refrigeration oil side) of the cylinder chamber of the cylinder 105. The lower bearing 107 has an approximate T shape in side view.

To the outside of the upper bearing 106 (the motor element 103 side), a discharge muffler 108 is attached. High-temperature and high-pressure discharge gas discharged from the discharge valve of the upper bearing 106 enters to the discharge muffler 108 once, and then is blown out into the hermetic container 101 from a discharge hole 108a of the discharge muffler 108.

Beside the hermetic container 101, a suction muffler 127 is provided for sucking the low-pressure refrigerant gas from the refrigerating cycle and suppressing the liquid refrigerant not to be directly sucked to the cylinder chamber of the cylinder 105 when the liquid refrigerant returns. The suction muffler 127 is connected to the suction port of the cylinder 105 via a suction joint pipe 128. The suction muffler 127 is fixed to the side face of the hermetic container 101 by welding, etc.

High-temperature and high-pressure gas refrigerant compressed by the compressor element 200 passes through the motor element 103 from the discharge hole 108a of the discharge muffler 108, and is discharged to the outside refrigerant circuit (not illustrated) from the discharge pipe 129.

Next, the motor element 103 will be explained with reference to not only Fig. 6 but also Fig. 7. The motor element 103 includes a stator 1 and a rotor 5. The motor element 103 is, for example, a brushless DC motor.

A lead wire 9 of the stator 1 is connected to a glass terminal 119 provided at the upper container 101a in order to supply electric power from the outside of the hermetic container 101.

Further, a stator iron core 2 has an outer diameter being larger than an inner diameter of the lower container 101b, and the stator iron core 2 is fixed to the lower container 101b by shrink-fit.

In the rotor 5, a rotor iron core 21 is made by laminating rotor core sheets formed by punching out thin electromagnetic steel plates similarly to the stator 1.

The rotor iron core 21 includes magnet insertion holes 22 (six) formed along an outer circumferential edge of the rotor iron core 21 and air holes 23 (nine). Permanent magnets 24 (six) are inserted to the magnet inverting holes 22, respectively.

At both ends of the rotor iron core 21 in the axial direction, an upper balance weight 25a and a lower balance weight 25b are provided.

The upper balance weight 25a is provided at the upper end of the rotor iron core 21 in the axial direction (the glass terminal 119 side).

The lower balance weight 25b is provided at the lower end of the rotor iron core 21 in the axial direction (the compressor element 102 side).

The upper balance weight 25a and the lower balance weight 25b also function to prevent the permanent magnets 24 from flying apart.

The upper balance weight 25a, the lower balance weight 25b, and the rotor iron core 21 are fixed by rivets 26 (three). The rivets 26 are inserted to rivet through holes 27 provided to the rotor iron core 21.

The air holes 23 formed on the rotor iron core 21 lead the refrigerant gas discharged from the compressor element 102 to the upper part of the hermetic container 101, and as well function to push down the refrigerating machine oil which has been led to the upper part of the hermetic container 101 together with the refrigerant gas to the lower part of the hermetic container 101.

To the upper end of the rotor iron core 21 in the axial direction (the glass terminal 119 side), an approximate disk-shaped oil separator 40 is provided. The oil separator 40 separates the refrigerating machine oil from the refrigerant gas including the refi-igerating machine oil which has passed through the air holes 23 of the rotor iron core 21 with centrifugal force.

The inner diameter of the rotor iron core 21 is smaller than the outer diameter of the main shaft part 104a of the rotating shaft 104, and the rotor iron core 21 is fixed to the main shaft part 104a of the rotating shaft 104 by shrink-fit.

In the hermetic compressor 130, there may be a case in which a temperature of the low-pressure side becomes less than zero degree, and if water enters into the hermetic container 101, the water is frozen, which prevents flow of the refrigerant and further causes the fault of the hermetic compressor 130. Therefore, the amount of water of the refrigerating cycle (the hermetic compressor 130, etc.) is strictly managed so as to be, for example, equal to or less than 500ppm of the amount of refrigerant.

The stator 1 of the present embodiment is provided inside of the hermetic compressor 130 in which the amount of water is extremely small. Therefore, even if the material which causes aluminum to get electrolytic etching such as copper or phosphor bronze is used as material of the press-contact terminal 8, the electrolytic etching which easily occurs between the aluminum wire of the winding 4 of the stator 1 and the press-contact terminal 8 can be suppressed.

Here, the rotary compressor has been explained as an example of the hermetic compressor 130; however, other compressors can be applied regardless of its structure as long as the motor element 103 is provided within the hermetic container 101 such as a scroll type compressor, a reciprocating compressor, etc.

As has been discussed, according to the present embodiment, the aluminum wire is used for at least a part of the winding 4 of the stator 1 which forms the motor element 103 contained in the hermetic compressor 130. Then, the winding connection part for connecting the winding 4 for at least a part of which the aluminum wire is used is structured by placing the winding 4, etc. on the cavities 51 and 52 of the insulating member 3 and inserting the press-contact terminals 8 to them. Since the connection of the winding 4, for at least a part of which the aluminum wire is used, is done without brazing, there is no fear that flux remains. Further, the stator 1 of the present embodiment is provided inside of the hermetic compressor 130 which contains extremely small amount of water, and thus even if the material which causes aluminum to get electrolytic etching such as brass or phosphor bronze is used as material of the press-contact terminal 8, the electrolytic etching which easily occurs between the aluminum wire of the winding 4 of the stator 1 and the press-contact terminal 8 can be suppressed.

Accordingly, it is possible to obtain the hermetic compressor 130 which is highly manufacturable and can maintain high quality, while inexpensive aluminum wire is used for the winding 4 of the stator 1 of the motor element 103.

The hermetic compressor related to the present embodiment is structured to use aluminum wire for at least a part of the winding, so that it brings an effect to manufacture with a low cost. Further, the compressor is structured to use the press-contact terminal for the winding connection part, and thus it also brings an effect to improve its manufacturability and maintain high quality.

### Embodiment 2.

In the above first embodiment, the aluminum wire is used for at least a part of the winding 4 of the stator I of the motor element 103 which forms the hermetic compressor 130. In the second embodiment, another example will be explained in which degradation of performance of the motor element 103 can be suppressed even if aluminum wire having less conductivity than copper wire is used.

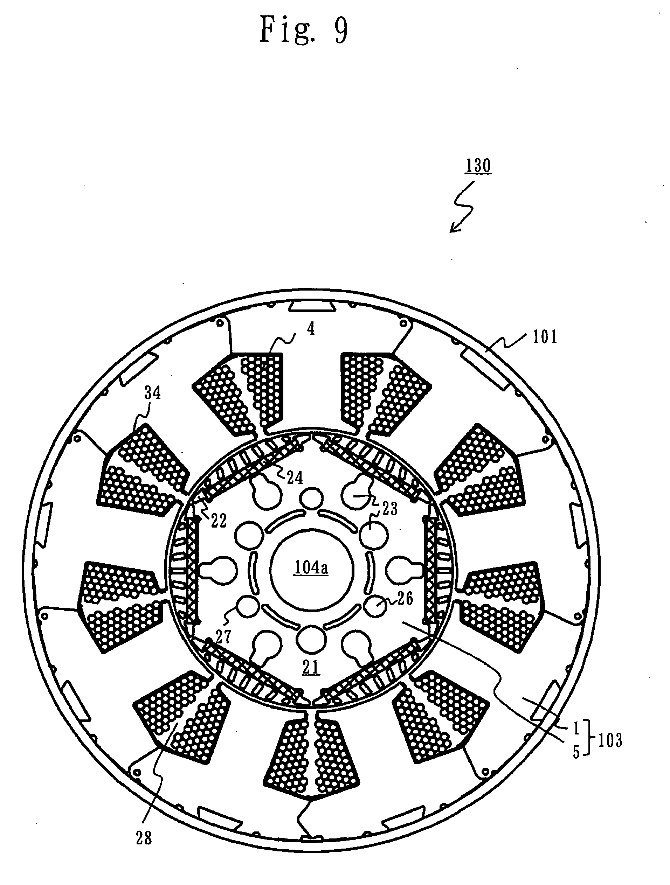

Figs. 8 and 9 show the second embodiment; Fig. 8 shows the insulating member 3 ((a) shows a top view of the wire-connection-side insulating member 3a, (b) shows a front view of the wire-connection-side insulating member 3a, (c) shows a side view of the wire-connection-side insulating member 3a, (d) shows a front view of an insulating film 34, (e) shows a side view of the insulating film 34, (f) shows is a top view of a counter-wire-connection-side insulating member 3b, (g) shows is a front view of the counter-wire-connection-side insulating member 3b, and (h) shows a side view of the counter-wire-connection-side insulating member 3b), and Fig. 9 is a cross sectional view of the hermetic compressor 130 corresponding to Fig. 7.

Although in the first embodiment, as partially shown in Fig. 2, the resin molded two-divided insulating member 3 is used, for the insulating member 3 shown in Fig. 8, one wire-connection-side insulating member 3a which is extended to the outside from the stator iron core 2 is formed by resin molding ((a), (b), and (c) in Fig. 8). The wire-connection-side insulating member 3a has the same shape as a part of the insulating member 3 which is extended from the stator iron core 2 in the first embodiment. The cavities 51 and 52 are formed at the wire-connection-side insulating member 3a.

As for a part within the slot 28 surrounded by the magnetic pole teeth of the stator iron core 2, the insulating film 34 formed by a low-oligomer film of which oligomer extraction amount is small such as PET (polyethylene terephtalate) or PPS (polyphenylene sulfide), etc. is used ((d) and (e) in Fig. 8). The oligomer means a polymer formed by a finite number (10 to 100, generally) of monomers and which has relatively low molecular weight. It is preferable that the oligomer extraction amount by chloroform extraction amount of 20-hour experiment of the insulating film 34 is equal to or less than 1.5%.

Further, for the insulating member 3 shown in Fig. 8, the counter-wire-connection-side insulating member 3b of the other side which is extended to the outside from the stator iron core 2 is formed by resin molding ((f), (g), and (h) in Fig. 8).

The wire-connection-side insulating member 3a and the insulating film 34 are agglutinated by a predetermined method. Further, the counter-wire-connection-side insulating member 3b and the insulating film 34 are agglutinated by a predetermined method.

The insulating member 3 includes the wire-connection-side insulating member 3a, the insulating film 34, and the counter-wire-comiection-side insulating member 3b.

The insulating member 3 explained in the first embodiment is formed by molding engineering plastic such as LCP (liquid crystal polymer), etc. For the operation of inserting the insulating member 3 into the magnetic pole teeth, automation can be easily done and manufacturing feature is good; on the contrary, there is a limitation in thinning the insulating member, because the resin is made to flow at the time of molding.

The more the ratio occupied by the insulating member 3 is within the slot 28 surrounded by the magnetic pole teeth, the less the amount of electric wiring to be wound is in the slot 28. Therefore, the insulating film 34 formed by low olygomer film such as PET, PPS, etc. is used for the material to insulate the magnetic pole teeth with the electric wire inside of the slot 28, thereby reducing the thin part of the insulating member 3 to around 1/10 through 1/20, and increasing the area to which the electric wire is wound.

Fig. 9 is a cross sectional view of the hermetic compressor 130 corresponding to Fig. 7. Compared with Fig. 7, it can be understood that the insulating film 34 inside of the slot 28 is thinned, the area to which the winding 4 is wound is increased, and the wire diameter of the electric wire is made larger even if the number of winding is the same.

The conductive ratio of aluminum is only 60% of copper. If the electric wire having the same wire diameter is used, copper loss caused by Joule heat increases, and the efficiency of the motor is degraded. The inside of the slot 28 is insulated by the insulating film 34, thereby the area to which the winding 4 is wound is increase, and thicker winding can be used to obtain the same number of windings as copper wire. Therefore, even if aluminum wire is used, it is possible to suppress degradation of the performance compared with a case using copper wire.

As has been discussed, the insulating member 3 includes the wire-connection-side insulating member 3a, the insulating film 34, and the counter-wire-connection-side insulating member 3b, thereby the area inside of the slot 28 to which the winding 4 is wound is increased, and even if the aluminum wire is used, thicker electric wire can be used compared with copper wire. Therefore, it is possible to suppress degradation of the performance.

### Embodiment 3.

While the hermetic compressor 130 has been explained in the above first and second embodiments, here a refrigerating cycle apparatus using the hermetic compressor 130 will be explained.

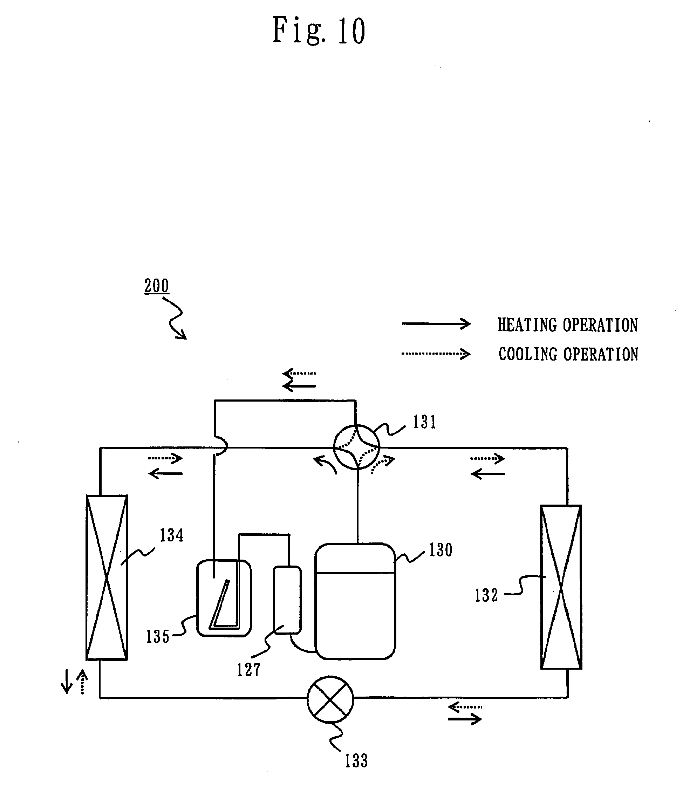

Fig. 10 shows the third embodiment, and is a general structural diagram of a refrigerant circuit of the refrigerating cycle apparatus. In Fig. 10, the refrigerating cycle apparatus 200 is formed by connecting with piping serially the hermetic compressor 130 explained in the first and second embodiments, a four side valve 131 for switching flow of refrigerant from the hermetic compressor 130, a outdoor-side heat exchanger 132, a decompression device 133 such as electric expansion, etc., a indoor-side heat exchanger 134, and an accumulator 135 connected to the suction side piping of the hermetic compressor 130 for reserving the refrigerant.

In Fig. 10, at the time of heating operation, the refrigerant flows in the direction shown by solid-line arrows. Further, at the time of cooling operation, the refrigerant flows in the direction shown by broken-line arrows.

Next, the operation of the refrigerating cycle apparatus structured like the above will be explained in the order of the heating operation and then the cooling operation.

When the heating operation is started, the four side valve 131 is connected to the solid-line side in Fig. 10, and thus the high-temperature and high-pressure refrigerant compressed by the hermetic compressor 130 flows into the indoor-side heat exchanger 134, is condensed by the indoor-side heat exchanger 134 to become liquid, and is squeezed by the decompression device 133 to become low-temperature and low-pressure two-phase refrigerant. Then the refrigerant flows into the outdoor-side heat exchanger 132, is evaporated by the outdoor-side heat exchanger 132 to become gas, then passes through the four side valve 131 and the accumulator 135, and returns to the hermetic compressor 130 again. Namely, the refrigerant cycles as shown by the solid-line arrows in Fig. 10.

Next, the cooling operation will be explained. When the cooling operation is started, the four side valve 131 is connected to the broken-line side in Fig. 10, and thus the high-temperature and high-pressure refrigerant compressed by the hermetic compressor 130 flows into the outdoor-side heat exchanger 132, is condensed by the outdoor-side heat exchanger 132 to become liquid, and is squeezed by the decompression device 133 to become low-temperature and low-pressure two-phase refrigerant. Then the refrigerant flows into the iiidoor-side heat exchanger 134, is evaporated to become gas, then passes through the four side valve 131 and the accumulator 135, and returns to the hermetic compressor 130 again. Namely, when the heating operation turns to the cooling operation, the indoor-side heat exchanger 134 is switched to the evaporator from the condenser, and the outdoor-side heat exchanger 132 is switched to the condenser from the evaporator.

In the refrigerating cycle apparatus as discussed above, since the refrigerant circuit including the inside of the hermetic compressor 130 has a structure being unable to be disassembled for maintenance, it is necessary to improve the reliability of components, and also to strictly manage not to have foreign substance mixed.

As has been discussed, the hermetic compressor 130 of the first and second embodiments is used for the refrigerating cycle apparatus, thereby it is possible to provide the highly reliable refrigerating cycle apparatus 200 of which mixture of foreign substance is small even if aluminum wire is used for the winding 4 of the stator 1.

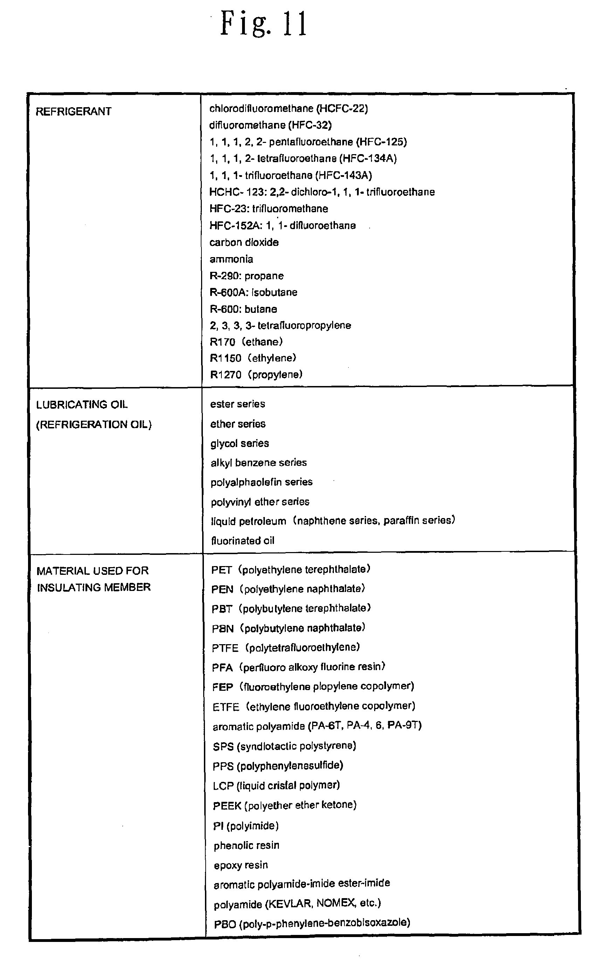

For the hermetic compressor, combinations of the refi-igerant, the refi-igeration oil for lubricating the compressor mechanism, and the material used for the insulating member and the insulating film shown in Fig. 11 are used.

Having thus described several particular embodiments of the present invention, various alterations, modifications, and improvements will readily occur to those skilled in the art. Such alterations, modifications, and improvements are intended to be part of this disclosure, and are intended to be within the spirit and scope of the present invention. Accordingly, the foregoing description is by way of example only, and is not intended to be limiting. The present invention is limited only as defined in the following claims and the equivalents thereto.

## Claims

1. A hermetic compressor (130) containing a motor element (103) having a stator (1) and a compressing element (102) driven by the motor element to compress refrigerant in a hermetic container (101),
wherein the stator comprises:
a stator iron core (2) having a plurality of magnetic pole teeth;
insulating members (3) to be inserted to the plurality of magnetic pole teeth;
windings (4), for at least a part of which aluminum wire is used, to be wound to the plurality of magnetic pole teeth via the insulating members;
winding connection parts provided to the insulating members and carrying out wire connection of the windings; and
press-contact terminals (8) used by the wire connection parts.

2. The hermetic compressor of claim 1, wherein the hermetic compressor is provided with cavities for containing the press-contact terminals to the winding connection parts of the insulating members.

3. The hermetic compressor of one of claims 1 and 2, wherein an insulating film (34) formed by low-oligomer film of which oligomer extraction amount is small is used for a part of the insulating members.

4. The hermetic compressor of claim 3, wherein the insulating film is used for insulating an inside of a slot (28) surrounded by the plurality of magnetic teeth of the stator iron core.

5. A refrigerating cycle apparatus (200) comprising:
for at least one of the hermetic compressors of claims 1 through 4;
a four side valve (131) for switching flow of refrigerant;
an outdoor-side heat exchanger (132);
a decompression device (133); and
an indoor-side heat exchanger (134).
